Europäisches Patentamt

European Patent Office

Office européen des brevets

(19)

(11)  EP 0 998 527 B1

## (12)  FASCICULE DE BREVET EUROPEEN

(45) Date de publication et mention
de la délivrance du brevet:
**09.10.2002  Bulletin 2002/41**

(21) Numéro de dépôt: **98941497.4**

(22) Date de dépôt: **30.07.1998**

(51) Int Cl.[7]: **C08L 23/08**

(86) Numéro de dépôt international:
**PCT/FR98/01696**

(87) Numéro de publication internationale:
**WO 99/006483 (11.02.1999 Gazette 1999/06)**

(54) **COMPOSITION COMPRENANT PLASTOMERE METALLOCENE ET COPOLYMERE ETHYLENE/(METH)ACRYLATE D'ALKYLE AVEC UN RAPPORT DE LEURS MODULES SECANTS SUPERIEUR A 1**

ZUSAMMENSETZUNG ENTHALTEND METALLOCEN-PLASTOMER UND ETHYLEN-ALKYL(METH)ACRYLAT MIT EINEM SEKANTSMODULVERHÄLTNIS HÖHER ALS 1

COMPOSITION COMPRISING METALLOCENE PLASTOMER AND ETHYLENE/ALKYL (METH)ACRYLATE POLYMER WITH THEIR SECANT MODULI RATIO GREATER THAN 1

(84) Etats contractants désignés:
**AT BE CH CY DE DK ES FI FR GB GR IE IT LI LU NL PT SE**

(30) Priorité: **01.08.1997  FR 9709859**

(43) Date de publication de la demande:
**10.05.2000  Bulletin 2000/19**

(73) Titulaire: **Atofina**
**92800 Puteaux (FR)**

(72) Inventeur: **HERT, Marius**
**F-27470 Serquigny (FR)**

(74) Mandataire: **Cabinet Hirsch**
**34, Rue de Bassano**
**75008 Paris (FR)**

(56) Documents cités:
**WO-A-94/06857**          **US-A- 5 051 297**

**Description**

La présente invention concerne une nouvelle composition de plastomère métallocène et de copolymère éthylène/(méth)acrylate d'alkyle, ainsi que les objets obtenus à partir de celle-ci.

On connaît des copolymères d'éthylène et d'alpha-oléfine obtenu par catalyse monosite métallocène. Ces copolymères étant homogènes en composition, il a été possible de préparer des produits ayant une densité comprise par exemple entre 0,905 et 0,880 g/cm$^3$, appelés plastomères, ayant de bonnes propriétés mécaniques et optiques. La répartition moléculaire de ces plastomères est très étroite, et se caractérise par un indice de polydispersité ou polymolécularité (rapport I = Mw/Mn) faible, en général I < 3.

Par conséquent, si ces plastomères ont de bonnes propriétés mécaniques et optiques, ils présentent une rhéologie peu adaptée à la mise en oeuvre par extrusion ou injection, à cause des caractéristiques suivantes :

- énergie spécifique élevée en raison d'une viscosité élevée aux gradients de cisaillement des vis d'extrusion;
- tendance aux défauts d'extrusion;
- instabilité de la matière fondue en sortie de filière, en raison d'une faible viscosité élongationnelle.

On recherche donc un moyen de modifier le comportement rhéologique de ces copolymères d'éthylène métallocène (plastomères) tout en conservant leurs propriétés mécaniques et optiques.

Plusieurs documents décrivent la modification de certains (co)polymères d'éthylène et d'alpha-oléfine par mélange avec d'autres (co)polymères.

US-A-3176052 décrit un mélange homogène comprenant, en poids, (a) 25 à 95% d'un copolymère éthylène/alpha-oléfine obtenu par catalyse Ziegler-Natta ayant une densité supérieure à 0,92 g/cm$^3$ et un MFI compris entre 0,1 et 10 dg/min, hétérogène en composition, et (b) 75 à 5% d'un polyéthylène radicalaire ayant une densité comprise entre 0,91 et 0,94 g/cm3.

US-A-4623581 décrit un mélange homogène comprenant, en poids, (a) 25 à 98% d'un copolymère éthylène/alpha-oléfine hétérogène en composition ayant une densité entre 0,905 et 0,940 g/cm$^3$ et un MFI compris entre 0,4 et 3 dg/min, et (b) 75 à 2% d'un polyéthylène radicalaire ayant une densité comprise entre 0,91 et 0,94 g/cm$^3$, ayant un indice de polydispersité supérieur à 4, ledit copolymère présentant des propriétés spécifiques de cristallinité et de distribution des monomères alpha-oléfiniques. Le polyéthylène radicalaire selon ce document peut être un copolymère d'éthylène avec jusqu'à 25% en poids d'un acrylate d'alkyle, par exemple 17,5% en poids d'acrylate de butyle. Il n'y a aucune mention dans ce document de l'amélioration des propriétés rhéologiques des polymères modifiés; ce n'est d'ailleurs pas le but recherché. Il est de plus indiqué dans ce document que ces polymères d'éthylène modifiés ne présentent pas d'indice de polydispersité compris entre 2,7 et 4,1 (en faisant référence au document EP-A-0006110); ces polymères d'éthylène modifiés présentent donc une rhéologie satisfaisante qui ne nécessite pas d'être modifiée.

EP-A-0006110 décrit un mélange comprenant, en poids,

(a) 80 à 99% d'un copolymère éthylène/alpha-oléfine ayant un indice de polydispersité compris entre 2,7 et 4,1, et
(b) 20 à 1% d'un homopolyéthylène basse densité haute pression, l'addition du PE basse densité ayant pour objet de pallier la rhéologie défaillante du copolymère éthylène/alpha-oléfine.

WO-A-9507314 décrit des emballages réalisés à partir de copolymères éthylène/alpha-oléfine substantiellement linéaires ayant des indices de polydispersité faibles, par exemple compris entre 1,5 et 2,5. Ce document décrit l'addition de plusieurs types de modifiants des propriétés de film, dont des modifiants rhéologiques, tout en indiquant que les copolymères éthylène/alpha-oléfine sont de préférence utilisés seuls. Les modifiants indiqués dans la description incluent LDPE, EVA, EVOH, PB, HDPE et LLDPE. L'exemple mentionné dans ce brevet indique comme modifiant rhéologique du LDPE ou un copolymère EP linéaire. Cependant, ces modifiants rhéologiques ont des modules très élevés, et donc ne permettent pas la production industrielle de film ayant des qualités suffisantes. Un autre modifiant possible selon ce document est un EVA; cependant ce modifiant ne peut pas être extrudé à une température suffisamment élevée car il se dégrade à des températures de 220°C, voire moins.

US-A-5326602 décrit des compositions comprenant un polymère d'éthylène avec un copolymère éthylène/acrylate. Le polymère d'éthylène est obtenu par catalyse Ziegler-Natta, et ne présente pas de distribution moléculaire étroite. De plus, ce document ne décrit pas l'action du copolymère éthylène/acrylate sur la processabilité d'un polymère d'éthylène.

US-A-5593747 décrit des compositions comprenant un polymère d'éthylène métallocène particulier, destiné à la fabrication de films thermorétractables. Selon ce document, ce polymère métallocène peut être mélangé avec un polymère thermoplastique. Cependant, les seuls exemples visent l'ajout d'EVA.

EP-A-0597502 décrit des compositions comprenant un polymère d'éthylène métallocène ayant une densité d'au moins 0,900 g/cm$^3$, destiné aussi à la fabrication de films thermorétractables. Selon ce document, ce polymère métallocène peut être mélangé avec un polymère thermoplastique du type copolymère d'éthylène radicalaire. Bien que les copolymères éthylène/acrylate soient mentionnés spécifiquement, les seuls exemples visent l'ajout d'EVA.

En fait, l'ajout d'EVA à un polymère métallocène ne permet pas d'améliorer sa processabilité. De plus, l'EVA n'est pas stable à des températures d'extrusion élevées, notamment de l'ordre de 200 à 220°C.

Aucun des documents ci-dessus n'enseigne ni ne suggère la présente invention.

Ainsi, l'invention fournit un film étirable collant, comprenant au moins une couche obtenue à partir d'une composition comprenant, en poids:

(i) de 50 à 95 % de copolymère métallocène éthylène/alpha-oléfine; et

(ii) de 50 à 5 % de copolymère radicalaire éthylène/(méth)acrylate d'alkyle,

le rapport des modules sécants étant supérieur à 1.

Selon une variante, la teneur en copolymère radicalaire éthylène/(méth)acrylate est comprise entre 5 et 25%.

Selon un mode de réalisation, le module de flexion de chaque copolymère est compris entre 10 et 100 MPa.

Le rapport des modules de flexion est avantageusement supérieur à 1.

Le copolymère métallocène éthylène/alpha-oléfine présente par exemple un indice de polydispersité entre 2 et 5 et de préférence entre 2 et 3.

Le copolymère métallocène éthylène/alpha-oléfine présente par exemple une densité comprise entre 0,905 et 0,880 g/cm$^3$, de préférence entre 0,900 et 0,880 g/cm$^3$.

Le copolymère métallocène éthylène/alpha-oléfine présente par exemple un MFI compris entre 0,5 et 10, et de préférence entre 0,8 et 5.

Le copolymère radicalaire éthylène/ (méth)acrylate d'alkyle comprend, par exemple, en poids par rapport au poids du copolymère, de 5 à 40% d'un (méth)acrylate d'alkyle en C1 à C8.

Le copolymère radicalaire éthylène/ (méth)acrylate d'alkyle présente par exemple un MFI compris entre 0,3 et 10.

De préférence, la composition selon l'invention est extrudée en un film.

L'invention a encore pour objet un procédé d'extrusion de la composition selon l'invention à une température supérieure ou égale à 200°C, par exemple entre 210 et 230°C, pour la fabrication de film.

L'invention sera maintenant décrite plus en détail dans la description qui suit.

Le terme "copolymère métallocène éthylène/alpha-oléfine" tel qu'utilisé dans l'invention désigne ces copolymères obtenus par catalyse métallocène, et seront indifféremment appelés "plastomères" ou "copolymère d'éthylène métallocène" dans la présente description.

On rappellera que cette catalyse métallocène est une catalyse monosite mettant en oeuvre un catalyseur constitué généralement d'un atome de métal entre deux cycles alkyles liés au métal. Comme métal on peut utiliser tous les métaux des groupes de transition IVA, VA et VIA, ainsi que les lanthanides. Des métaux préférés sont l'hafnium, le zirconium et le titane. En tant que cycle alkyle on utilise généralement le cyclopentadiène. On utilise aussi éventuellement un cocatalyseur ou activateur, par exemple un aluminoxane, tel que le méthylaluminoxane (MAO). Pour d'autres éléments sur cette catalyse, l'homme de l'art se reportera aux ouvrages classiques en la matière.

En tant qu'alpha-oléfine on utilise toute alpha-oléfine ayant de 3 à 12 atomes de carbone, de préférence de 3 à 8. Des exemples d'alpha-oléfine sont propylène, butène, hexène et octène. Une alpha-oléfine préférée est l'octène. La proportion d'alpha-oléfine dans le plastomère peut aller jusqu'à 40% en poids et varie de façon classique entre 10 et 35% en poids, par exemple entre 10 et 30%.

Dans le cas du film étirable collant, on utilise par exemple l'octène comme alpha-oléfine, la proportion étant comprise par exemple notamment entre 20 et 25%.

Ces plastomères de l'invention sont homogènes en composition.

La densité de ces copolymères métallocène est généralement comprise entre 0,910 et 0,875 g/cm$^3$, de préférence entre 0,910 et 0,880 g/cm$^3$, avantageusement elle est inférieure à 0,900 g/cm$^3$,

L'indice de polydispersité de ces plastomères est faible, généralement compris entre 2 et 5, de préférence entre 2 et 3. Le MFI (indice d'écoulement à l'état fondu, tel que mesuré selon la norme ASTM D 1238-73) est généralement compris entre 0,5 et 10, de préférence entre 0,8 et 5.

Ces plastomères sont sensiblement linéaires.

Le module de flexion de ces plastomères est de préférence compris entre 10 et 100 MPa; par exemple entre 10 et 50 MPa

Des mélanges de plastomères sont aussi envisagés.

De tels plastomères sont disponibles dans le commerce chez Dow et Exxon, respectivement sous les dénominations Affinity et Exact.

Le terme "copolymère radicalaire éthylène/(méth)acrylate d'alkyle" désigne ces copolymères comprenant, en poids par rapport au poids dudit copolymère, jusqu'à 60% en poids de (méth)acrylate d'alkyle, obtenu par synthèse avec initiateur de radicaux libres, et seront indifféremment appelés "copolymère éthylène/(méth)acrylate" ou "copolymère EAA" dans la présente description.

Ces copolymères EAA sont en général obtenus dans un procédé haute pression, et montrent en général une distribution moléculaire large et du branchement long (i.e. une branche ayant un nombre de segments monomères du même ordre que celui de la chaîne principale). Des exemples et procédés de préparation de tels copolymères EAA sont donnés, par exemple dans les brevets US-A-4617366 et US-A-5543233.

La teneur en poids en (méth)acrylate, par rapport au poids du copolymère EAA, est généralement comprise entre 1 et 60%, en particulier entre 5 et 40%.

Ce terme de (méth)acrylate d'alkyle désigne les méthacrylate et acrylate d'alkyle linéaire, ramifié ou cyclique contenant de 1 à 12, de préférence de 1 à 8 atomes de carbone, par exemple méthyle, éthyle, butyle, et 2-éthylhexyle. Des exemples spécifiques de copolymère EAA sont le méthacrylate de méthyle, l'acrylate de méthyle, l'acrylate d'éthyle, l'acrylate de butyle.

L'indice MFI de ces copolymères EAA est généralement compris entre 0,1 et 400 dg/min, par exemple entre 0,3 et 10 dg/min.

D'autres monomères peuvent éventuellement être présents dans les copolymères EAA, dans la mesure où les propriétés finales ne sont pas affectées. Des exemples de tels termonomères sont les esters vinyliques d'acide carboxylique saturé, l'anhydride maléique et le (méth)acrylate de glycidyle. Ce termonomère peut être présent en une quantité par exemple jusqu'à 10% en poids, par rapport au poids dudit copolymère EAA, et peut être greffé ou terpolymérisé.

Dans la mesure où la température de dégradation thermique de ces copolymères EAA est élevée, les températures usuelles de transformation des plastomères peuvent être utilisées sans risque de dégradation pour les copolymères EAA.

Le module de flexion de ces copolymères EAA est de préférence compris entre 10 et 100 MPa; par exemple entre 10 et 50 MPa.

Des mélanges de copolymères EAA sont aussi envisagés.

Dans le cas des films étirables collants, un EAA préféré : comprend un acrylate de méthyle et/ou présente un MFI compris entre 3 et 10 et/ou comprend entre 20 et 35% en poids d'acrylate.

De tels copolymères EAA sont disponibles dans le commerce chez Elf Atochem, sous la dénomination Lotryl®.

Un mode de réalisation particulier correspond à celui où le rapport :

$$\frac{\text{module de flexion du plastomère}}{\text{module de flexion copolymère EAA}}$$

est supérieur à 1, et par exemple compris entre 1 et 3. Un tel rapport est intéressant par exemple pour les objets "massifs" obtenus à partir des compositions de l'invention.

Selon l'invention, le rapport :

$$\frac{\text{module sécant du plastomère}}{\text{module sécant copolymère EAA}}$$

est supérieur à 1, et par exemple compris entre 1 et 3. Un tel rapport est intéressant par exemple pour les films obtenus à partir des compositions de l'invention.

Il est clair que d'autres polymères peuvent être ajoutés aux compositions selon l'invention, en des quantités ne nuisant pas aux propriétés recherchées et classiques pour l'homme de l'art.

Il est tout aussi clair que des additifs et adjuvants classiques peuvent être ajoutés aux mélanges selon l'invention, en des quantités classiques pour l'homme de l'art. Des exemples de tels additifs sont des anti-UV, anti-oxydants, pigments, des charges telles que silice, fibres.

L'invention fournit aussi les objets obtenus à partir de ces mélanges, et notamment des films. L'épaisseur du film est classique, par exemple entre 10 et 500 μm. Ces films sont fabriqués sur des installations classiques pour PE, LDPE.

Les films selon l'invention comprennent au moins une couche obtenue à partir d'une composition selon l'invention.

Selon une variante, les films selon l'invention comprennent une couche collante et sont des films étirables collants. Dans ce cas, la couche collante selon l'invention comprend suffisamment du copolymère EAA, avantageusement de 5 à 50%, polymère EAA dans lequel la teneur en comonomère acrylate est avantageusement comprise entre 10 et 35%, préférentiellement entre 20 et 35%.

Selon une autre variante, les films selon l'invention comprennent une couche collante obtenue à partir de la composition selon l'invention, et une couche glissante. Cette couche glissante peut être obtenue à partir d'une polyoléfine, telle qu'un polypropylène ou un polyéthylène (LLDPE, LDPE, métallocène). Cette couche glissante peut aussi contenir des additifs anti-collage et/ou de glissement. Dans le film, la couche collante représente de 5 à 95%, préférentiellement 5 à 35%, avantageusement 10 à 20% de l'épaisseur combinée des couches collante et glissante.

D'autres couches peuvent être présentes, pour obtenir des films multicouches.

Les mélanges selon l'invention peuvent être préparés par tout procédé classique, notamment par compoundage, à l'aide par exemple d'extrudeuses mono-vis à profil malaxeur, extrudeuses bi-vis, mélangeurs internes, mélangeurs à cylindres. Les mélanges peuvent aussi être réalisés directement avec les extrudeuses de transformation, en extrusion de gaine, de film, de profilés, sur presse à injecter. Les conditions opératoires sont celles classiques pour le PE, le LDPE.

En particulier, il est possible d'extruder les compositions de l'invention à des températures supérieures ou égales à 200°C, par exemple entre 210 et 230°C, sans risquer de dégradation des produits.

L'invention permet donc (i) la modification de plastomères métallocène pour leur conférer une aptitude à la processabilité, notamment par la réduction de l'énergie spécifique et l'amélioration de la stabilité de l'extrudat et parallèlement (ii) la modification de copolymères EAA pour améliorer leurs propriétés mécaniques et optiques.

Les exemples suivants illustrent l'invention.

Exemples.

Dans ces exemples, les mélanges sont réalisés sur une extrudeuse de gaine équipée d'une vis à 3 zones avec malaxeur du type pour LDPE radicalaire, et de diamètre 45 mm. Le profil de température est croissant, et se termine à 230°C, et la vitesse de vis est de 100 tpm pour l'extrusion des témoins et des compositions selon l'invention. Toutes les gaines sont étirées à une épaisseur de 50 μm avec un taux de gonflage de 2.

Les compositions sont réalisées à partir des copolymères suivants :

**A1** copolymère éthylène/octène, de composition massique 88/12, obtenu par catalyse métallocène, de densité 0,902 g/cm$^3$, de MFI 1,0 dg/min, correspondant au copolymère donné à la seconde ligne du tableau 1, page 6, de WO-A-9507314.

**A2** copolymère éthylène/octène, de composition massique 86/14, obtenu par catalyse métallocène, de densité 0,895 g/cm$^3$, de MFI 1,6 dg/min.

**B** copolymère éthylène/acrylate de méthyle, de MFI 2 dg/min et de taux massique d'acrylate de méthyle de 16,5% (correspondant à un taux molaire de 6%).

**C** copolymère éthylène/acrylate de méthyle, de MFI 0,3 dg/min et de taux massique d'acrylate de méthyle de 14% (correspondant à un taux molaire de 5%).

**D** copolymère éthylène/acrylate de méthyle, de MFI 7 dg/min et de taux massique d'acrylate de méthyle de 28%.

On procède aux exemples suivants, pour lesquels on détermine les caractéristiques suivantes:

- Energie spécifique de la matière, exprimée en kWh/kg, correspondant à la puissance du moteur de l'extrudeuse rapportée au débit de matière.
- Trouble (haze) exprimé en % de lumière diffusée, mesuré selon la norme ASTM D 1003.
- Résistance au déchirement mesurée selon la méthode Elmendorf (ASTM D 1922) dans le sens machine (MD) et dans le sens transversal (TD), exprimée en g/50 μm.
- Résistance à l'impact mesurée selon la méthode Dart (ASTM D 1709) exprimée en g/50 μm.
- Module sécant (ou module à 1% d'élongation), mesuré selon la norme ASTM-D-882, exprimé en MPa.

Exemple Comparatif A (ECA).

Le copolymère A1 est extrudé seul. Le débit d'extrusion est inférieur à 34 kg/h, et on note un manque de stabilité de l'extrudat et un énergie spécifique du polymère conduisant à une prise de puissance du moteur très proche de la limite acceptable.

Cet exemple est répété avec le copolymère A2 ; on obtient les mêmes résultats.

Exemple Comparatif B (ECB).

Le copolymère B est extrudé seul. L'extrusion est stable au débit de 34 kg/h, et on note une prise de puissance du moteur correspondant à environ 50% du maximum.

Exemple Comparatif C (ECC).

Le copolymère C est extrudé seul. L'extrusion est stable au débit de 35 kg/h, et on note une prise de puissance du moteur correspondant à environ 65% du maximum.

Exemple 1.

On mélange 80% en poids du copolymère A1 avec 20% en poids du copolymère B. On obtient un extrudat stable avec une augmentation du débit de 10%. Le film a de bonnes propriétés optiques et une résistance à la déchirure améliorée par rapport aux films de A1 et B seuls.

Exemple 2.

On mélange 80% en poids du copolymère A1 avec 20% en poids du copolymère C. On obtient un extrudat stable avec une augmentation du débit de 10%.

Exemple 3.

On mélange 60% en poids du copolymère A1 avec 40% en poids du copolymère B. On obtient un extrudat stable avec une augmentation du débit de 20%.

Exemple 4.

On mélange 60% en poids du copolymère A1 avec 40% en poids du copolymère C. On obtient un extrudat stable avec une augmentation du débit de 20%.
Les exemples 1 à 4 sont répétés avec le copolymère A2 ; on obtient des résultats similaires.

Exemple 5.

On mélange 40% en poids du copolymère A1 avec 60% en poids du copolymère B. L'extrusion reste stable. On note une amélioration de la résistance à l'impact, la résistance à la déchirure et le trouble (haze).

Exemple 6.

On mélange 40% en poids au copolymère A1 avec 60% en poids du copolymère C. L'extrusion reste stable. On note une amélioration de la résistance à l'impact, la résistance à la déchirure et le trouble (haze).

Exemple 7.

On mélange 20% en poids du copolymère A1 avec 80% en poids du copolymère B. L'extrusion reste stable. On note une amélioration de la résistance à l'impact.

Exemple 8.

On mélange 20% en poids du copolymère A1 avec 80% en poids du copolymère B. L'extrusion reste stable. On note une amélioration de la résistance à l'impact, la résistance à la déchirure et le trouble (haze).
Les résultats sont consignés dans le tableau qui suit, dans lequel (2) signifie que l'exemple est celui correspondant au copolymère A2. La lecture des résultats permet de conclure que les mélanges selon l'invention offrent de bonnes propriétés mécaniques et optiques tout en permettant une processabilité améliorée.

Exemple 9.

On mélange 60% en poids du copolymère A1 avec 40% en poids du copolymère D. On détermine les propriétés du film résultant. Ce film est un film étirable collant.

Exemple 10.

On prépare un bi-couche dont la couche collante est la couche de l'exemple précédent et la couche glissante est obtenu à partir du copolymère A1, la couche collante représentant 18% de l'épaisseur totale du film final.

Les exemples 9 et 10 sont répétés avec le copolymère A2 ; on obtient les mêmes résultats.

Exemple 11.

L'exemple 9 est répété, cette fois avec un copolymère de densité 0,891, comprenant 24% en poids d'octène. On obtient un film dont les propriétés collantes sont très bonnes.

| Ex. | Composition (%) | | | | Energie spécifique (kWh/kg) | Trouble (%) | Résistance à l'impact (g) | Résistance à la Déchirure (g) | | Module sécant |
|-----|-----|-----|-----|-----|-----|-----|-----|-----|-----|-----|
| | A1 | A2 | B | C | | | | MD | TD | |
| ECA | 100 | | | | 0,35 | 1,6 | >840 | 688 | 779 | 26 |
| ECA(2) | | 100 | | | 0,35 | 1,9 | >840 | 580 | 1044 | 28,2 |
| ECB | | | 100 | | 0,16 | 8,7 | 373 | 253 | 302 | 18,4 |
| ECC | | | | 100 | 0,23 | 25,3 | 571 | 165 | 360 | 16,8 |
| 1 | 80 | | 20 | | 0,32 | 3,1 | >840 | 790 | 958 | 22,3 |
| 1(2) | | 80 | 20 | | 0,32 | 3,3 | >840 | 691 | 1078 | 24,3 |
| 2 | 80 | | | 20 | 0,33 | 6,8 | >840 | 661 | 749 | 18,5 |
| 2(2) | | 80 | | 20 | 0,33 | 7,0 | >840 | 606 | 886 | 19,5 |
| 3 | 60 | | 40 | | 0,22 | 4,6 | >840 | 522 | 674 | 22,8 |
| 3(2) | | 60 | 40 | | 0,22 | 4,9 | >840 | 488 | 722 | 23,9 |
| 4 | 60 | | | 40 | 0,31 | 10,5 | >840 | 563 | 728 | 22,4 |
| 4(2) | | 60 | | 40 | 0,31 | 11,8 | >840 | 531 | 828 | 24,1 |
| 5 | 40 | | 60 | | 0,20 | 9 | >840 | 330 | 467 | 18,8 |
| 6 | 40 | | | 60 | 0,27 | 12,3 | >840 | 350 | 517 | 19,4 |
| 7 | 20 | | 80 | | 0,18 | 13,1 | >840 | 219 | 282 | 29,4 |
| 8 | 20 | | | 80 | 0,23 | 17,8 | 727 | 190 | 379 | 28 |

**Revendications**

1. Film étirable collant, comprenant au moins une couche obtenue à partir d'uns composition comprenant, en poids:

   (i) de 50 à 95 % de copolymère métallocène éthylène/alpha-oléfine; et
   (ii) de 50 à 5 % de copolymère radicalaire éthylène/(méth)acrylate d'alkyle,

   le rapport des modules sécants étant supérieur à 1.

2. Film selon la revendication 1, dans lequel dans la composition, le copolymère métallocène éthylène/alpha-oléfine présente un indice de polydispersité compris entre 2 et 5.

3. Film selon la revendication 2, dans lequel dans la composition, le copolymère métallocène éthylène/alpha-oléfine présente un indice de polydispersité compris entre 2 et 3.

4. Film selon l'une quelconque des revendications 1 à 3, dans lequel dans la composition, le copolymère métallocène éthylène/alpha-oléfine présente une densité inférieure à 0,900 g/cm$^3$.

5. Film selon l'une quelconque des revendications 1 à 4, dans lequel dans la composition, le copolymère métallocène éthylène/alpha-oléfine présente une densité comprise entre 0,900 et 0,880 g/cm$^3$.

6. Film selon l'une quelconque des revendications 1 à 5, dans lequel dans la composition, le copolymère métallocène éthylène/alpha-oléfine présente un MFI compris entre 0,5 et 10.

7. Film selon la revendication 6, dans lequel dans la composition, le copolymère métallocène éthylène/alpha-oléfine présente un MFI compris entre 0,8 et 5.

8. Film selon l'une quelconque des revendications 1 à 7, dans lequel dans la composition, le copolymère métallocène éthylène/alpha-oléfine comprend de 10 à 30% en poids d'alpha-oléfine.

9. Film selon l'une quelconque des revendications 1 à 8, dans lequel dans la composition, le copolymère métallocène éthylène/alpha-oléfine est un copolymère éthylène/octène.

10. Film selon l'une quelconque des revendications 1 à 9, dans lequel dans la composition, le copolymère radicalaire éthylène/(méth)acrylate d'alkyle comprend, en poids par rapport au poids du copolymère, de 5 à 40% d'un (méth)acrylate d'alkyle en C1 à C8.

11. Film selon la revendication 10, dans lequel dans la composition, la teneur en (méth)acrylate d'alkyle dans ledit copolymère radicalaire est comprise entre 10 et 35%.

12. Film selon l'une quelconque des revendications 1 à 11, dans lequel dans la composition, le copolymère radicalaire échylène/ (méth)acrylate d'alkyle présente un MFI compris entre 0,3 et 10.

13. Film selon l'une quelconque des revendications 1 à 12, comportant en outre une couche glissante.

14. Film selon la revendication 13, dans lequel la couche glissante comprend une polyoléfine.

15. Film selon la revendication 13 ou 14, dans lequel la couche collante représente de 5 à 95% de l'épaisseur combinée des couches collante et glissante.

16. Film selon la revendication 15, dans lequel la couche collante représente de 5 à 35% de l'épaisseur combinée des couches collante et glissante.

17. Film selon la revendication 16, dans lequel la couche collante représente de 10 à 20% de l'épaisseur combinée des couches collante et glissante.

18. Procédé de préparation d'un film selon l'une quelconque des revendications 1 à 17, comprenant l'extrusion de ladite composition à une température supérieure ou égale à 200°C.

**Claims**

1. Adhesive stretch film, comprising at least one layer obtained from a composition comprising, by weight:

    (i) from 50 to 95% of an ethylene/alpha-olefin metallocene copolymer; and
    (ii) from 50 to 5% of an ethylene/alkyl (meth)acrylate copolymer,

    the ratio of the secant moduli being greater than 1.

2. Film according to Claim 1, in which the ethylene/ alpha-olefin metallocene copolymer in the composition has a polydispersity index of between 2 and 5.

3. Film according to Claim 2, in which the ethylene/ alpha-olefin metallocene copolymer in the composition has a polydispersity index of between 2 and 3.

4. Film according to any one of Claims 1 to 3, in which the ethylene/alpha-olefin metallocene copolymer in the composition has a density of less than 0.900 g/cm$^3$.

5. Film according to any one of Claims 1 to 4, in which the ethylene/alpha-olefin metallocene copolymer in the composition has a density of between 0.900 and 0.880 g/cm$^3$.

6. Film according to any one of Claims 1 to 5, in which the ethylene/alpha-olefin metallocene copolymer in the composition has an MFI of between 0.5 and 10.

7. Film according to Claim 6, in which the ethylene/ alpha-olefin metallocene copolymer in the composition has an MFI of between 0.8 and 5.

8. Film according to any one of Claims 1 to 7, in which the ethylene/alpha-olefin metallocene copolymer in the composition comprises from 10 to 30% by weight of alpha-olefin.

9. Film according to any one of Claims 1 to 8, in which the ethylene/alpha-olefin metallocene copolymer in the composition is an ethylene/octene copolymer.

10. Film according to any one of Claims 1 to 9, in which the ethylene/alkyl (meth)acrylate radical copolymer in the composition comprises, by weight with respect to the weight of the copolymer, from 5 to 40% of a $C_1$ to $C_8$ alkyl (meth)acrylate.

11. Film according to Claim 10, in which the alkyl (meth)acrylate content of the said radical copolymer in the said composition is between 10 and 35%.

12. Film according to any one of Claims 1 to 11, in which the ethylene/alkyl (meth)acrylate radical copolymer in the composition has an MFI of between 0.3 and 10.

13. Film according to any one of Claims 1 to 12, which furthermore includes a slip layer.

14. Film according to Claim 13, in which the slip layer comprises a polyolefin.

15. Film according to Claim 13 or 14, in which the adhesive layer represents from 5 to 95% of the combined thickness of the adhesive and slip layers.

16. Film according to Claim 15, in which the adhesive layer represents 5 to 35% of the combined thickness of the adhesive and slip layers.

17. Film according to Claim 16, in which the adhesive layer represents from 10 to 20% of the combined thickness of the adhesive and slip layers.

18. Process for producing a film according to any one of Claims 1 to 17, comprising the extrusion of the said composition at a temperature greater than or equal to 200°C.

**Patentansprüche**

1. Dehnbare Haftfolie mit mindestens einer Schicht, die erhalten wurde ausgehend von einer Zusammensetzung aufweisend, in Gew.-%:

   (i) 50 bis 95% Metallocen-Ethylen/alpha-Olefin-Copolymer, und
   (ii) 50 bis 5% radikalisches Ethylen/Alkyl-(meth)acrylat—Copolymer,

   wobei das Verhältnis der Sekantsmodule größer als 1 ist.

2. Folie nach Anspruch 1, bei der in der Zusammensetzung das Metallocen-Ethylen/alpha-Olefin-Copolymer einen Polydispersitätsindex zwischen 2 und 5 aufweist.

3. Folie nach Anspruch 2, bei der in der Zusammensetzung das Metallocen-Ethylen/alpha-Olefin-Copolymer einen Polydispersitätsindex zwischen 2 und 3 aufweist.

4. Folie nach einem der Ansprüche 1 bis 3, bei der in der Zusammensetzung das Metallocen-Ethylen/alpha-Olefin-Copolymer eine Dichte von unterhalb 0,900 g/cm$^3$ aufweist.

5. Folie nach einem der Ansprüche 1 bis 4, bei der in der Zusammensetzung das Metallocen-Ethylen/alpha-Olefin—-Copolymer eine Dichte zwischen 0,900 und 0,880 g/cm$^3$ aufweist.

6. Folie nach einem der Ansprüche 1 bis 5, bei der in der Zusammensetzung das Metallocen-Ethylen/alpha-Olefin-Copolymer einen MFI zwischen 0,5 und 10 aufweist.

7. Folie nach Anspruch 6, bei der in der Zusammensetzung das Metallocen-Ethylen/alpha—Olefin—Copolymer einen MFI zwischen 0,8 und 5 aufweist.

8. Folie nach einem der Ansprüche 1 bis 7, bei der in der Zusammensetzung das Metallocen—Ethylen/alpha—Olefin-Copolymer 10 bis 30 Gew.-% alpha-Olefin enthält.

9. Folie nach einem der Ansprüche 1 bis 8, bei der in der Zusammensetzung das Metallocen-Ethylen/alpha-Olefin-Copolymer ein Ethylen/Octen—Copolymer ist.

10. Folie nach einem der Ansprüche 1 bis 9, bei der in der Zusammensetzung das radikalische Ethylen/Alkyl-(meth)acrylat-Copolymer, gewichtsmäßig im Verhältnis zum Gewicht des Copolymers, 5 bis 40% eines C1- bis C8-Alkyl-(meth)acrylats enthält.

11. Folie nach Anspruch 10, bei der in der Zusammensetzung der Gehalt an Alkyl-(meth)acrylat in dem radikalischen Copolymer zwischen 10 und 35% liegt.

12. Folie nach einem der Ansprüche 1 bis 11, bei der in der Zusammensetzung das radikalische Ethylen/Alkyl-(meth)acrylat-Copolymer einen MFI zwischen 0,3 und 10 aufweist.

13. Folie nach einem der Ansprüche 1 bis 12, außerdem eine Gleitschicht aufweisend.

14. Folie nach Anspruch 13, bei der die Gleitschicht ein Polyolefin enthält.

15. Folie nach Anspruch 13 oder 14, bei der die Haftschicht 5 bis 95% der Gesamtdicke der Haftschicht und Gleitschicht ausmacht.

16. Folie nach Anspruch 15, bei der die Haftschicht 5 bis 35% der Gesamtdicke der Haftschicht und Gleitschicht ausmacht.

17. Folie nach Anspruch 16, bei der die Haftschicht 10 bis 20% der Gesamtdicke der Haftschicht und Gleitschicht ausmacht.

18. Verfahren zur Herstellung einer Folie nach einem der Ansprüche 1 bis 17, aufweisend das Extrudieren der Zusammensetzung bei einer Temperatur oberhalb oder gleich 200°C.